# FASCICULE DE BREVET EUROPEEN

(11) **EP 2 957 451 B1**
(45) Date de publication et mention de la délivrance du brevet: **04.09.2019**
(21) Numéro de dépôt: 15171298.1
(22) Date de dépôt: 10.06.2015
(51) Int. Cl.: B60M 1/08, B60M 1/10, B60M 3/04

(54) **SYSTÈME DE CONTRÔLE DE L'ALIMENTATION D'UN SECTEUR ÉLECTRIQUE DE CATÉNAIRE D'UNE INFRASTRUCTURE FERROVIAIRE**
KONTROLLSYSTEM DER STROMVERSORGUNG EINES ELEKTRISCHEN SEKTORS DER OBERLEITUNG EINER EISENBAHNINFRASTRUKTUR
SYSTEM FOR CONTROLLING THE CATENARY MAINS POWER SUPPLY OF A RAILWAY INFRASTRUCTURE

(30) Priorité: 20.06.2014 FR 1455718
(43) Date de publication de la demande: 23.12.2015
(73) Titulaire: SNCF RESEAU, 93418 La Plaine Saint-Denis Cedex (FR)
(72) Inventeur: Brogard, Cédric, 75015 PARIS (FR); Poirier, Thierry, 45320 COURTENAY (FR); Courtois, Christian, 92340 BOURG LA REINE (FR); Bobillot, Adrien, 75005 PARIS (FR)
(74) Mandataire: IPAZ

(56) Documents cités:
- EP-A1- 1 043 187
- CN-U- 201 901 020
- DE-A1- 3 527 309
- DE-C1- 594 158

## Description

### Domaine technique

L'invention se situe dans le domaine de l'alimentation électrique de trains. Elle s'applique notamment à des trains alimentés par caténaire. Plus précisément, l'invention concerne un système de contrôle de l'alimentation d'un secteur électrique de caténaire d'une infrastructure ferroviaire.

### État de la technique antérieure

Dans l'état actuel des pratiques, une sous-station d'un secteur d'alimentation débite constamment du courant dans tous les secteurs de la caténaire primaire de sa zone, indépendamment de l'utilisation effective de ce courant, ce qui occasionne des pertes inutiles d'énergie, par exemple par rayonnement du fil de contact.

On connaît du document DE 35 27 309 A1 un système de contrôle de l'alimentation d'une sous-station d'une caténaire d'une infrastructure ferroviaire, à partir d'un module alimentant un secteur d'alimentation.

On connaît également les documents CN 201 901 020 U, EP 1 043 187 A1 et DE 594 158 C.

Toutefois ce type d'alimentation engendre des pertes inutiles d'énergie électrique et nécessite un module dimensionné pour alimenter tout un secteur d'alimentation.

### Exposé de l'invention

Un but de l'invention est notamment de remédier à l'inconvénient précité.

Ce but est atteint par un système pour contrôler l'alimentation d'un secteur électrique de caténaire d'une infrastructure ferroviaire, selon la revendication 1.

Deux branches principales de développement de ce système sont envisagées.

Selon une première branche, qui ne fait pas partie de l'invention telle que revendiquée, des moyens de détection de circulation dans un domaine d'alimentation peuvent comprendre des moyens, liés à l'infrastructure ferroviaire, pour détecter l'entrée et/ou la sortie d'un train dans le domaine d'alimentation.

De manière particulièrement avantageuse, les moyens de détection de circulation dans un domaine d'alimentation peuvent être des composants du système de signalisation ferroviaire. Cette caractéristique a pour avantage de permettre d'utiliser une infrastructure déjà existante à savoir le système de signalisation ferroviaire. Il devient alors inutile d'acheter et d'installer de nouveaux équipements.

De préférence, les moyens pour détecter l'entrée et/ou la sortie dans le domaine peuvent respectivement être situés en amont de l'entrée du domaine d'alimentation et/ou en aval de la sortie du domaine d'alimentation.

Selon une seconde branche, selon l'invention, les moyens de détection de circulation dans un domaine d'alimentation peuvent comprendre des moyens pour recevoir des signaux émis par un train et des moyens pour traiter les signaux reçus de façon à détecter l'entrée et/ou la sortie du train dans le domaine d'alimentation.

De préférence, les moyens de réception peuvent être aptes à recevoir des signaux de type courant-porteur via la caténaire et/ou des signaux de type radiofréquence.

De préférence, les moyens pour traiter les signaux reçus peuvent en outre être configurés pour interagir avec les moyens de commande en fonction de la puissance des signaux reçus, qui elle-même peut dépendre de la puissance de la circulation émettrice. Dans ce cas, une circulation nécessitant une forte puissance émettra un signal plus puissant, qui sera donc reçu d'autant plus loin que la circulation est puissante.

De préférence, les moyens pour traiter les signaux reçus peuvent en outre être configurés pour déterminer certaines informations concernant la circulation, par exemple le numéro de la circulation, à partir des signaux reçus.

Selon l'une ou l'autre de ces deux branches, le système selon l'invention peut comprendre des moyens pour mesurer la tension effective dans la caténaire au niveau de la sous-station, le système étant configuré pour commander la non alimentation du domaine d'alimentation lorsque la tension effective est supérieure à un seuil prédéterminé.

Selon l'une ou l'autre de ces deux branches, les moyens de détection de circulation peuvent être agencés pour différencier, dans le domaine d'alimentation, une circulation électrique d'une circulation autonome, les moyens de commande de sous-station étant agencés pour alimenter électriquement le secteur de caténaire uniquement en cas de détection d'une circulation électrique.

Selon l'une ou l'autre de ces deux branches, le système peut être mis en oeuvre pour une infrastructure dans laquelle au moins un domaine d'alimentation attaché à une sous-station est découpé en une pluralité de sous-domaines d'alimentation. Les moyens de détection de circulation et les moyens de commande de la sous-station coopèrent alors pour commander une alimentation sélective respective de secteurs de caténaire correspondant respectivement aux sous-domaines d'alimentation.

### Description des figures

D'autres avantages et particularités de l'invention apparaîtront à la lecture de la description détaillée de mises en oeuvre et de modes de réalisation nullement limitatifs, au regard de dessins annexés sur lesquels :
- la figure 1 représente schématiquement une alimentation d'une caténaire d'une infrastructure ferroviaire ;
- la figure 2 illustre un mode de réalisation d'un système qui ne fait pas partie de l'invention telle que revendiquée ;
- la figure 3 illustre le mode de réalisation d'un système selon l'invention.

### Description de modes de réalisation

Les modes de réalisation décrits ci-après étant nullement limitatifs, on pourra notamment considérer des variantes de l'invention ne comprenant qu'une sélection de caractéristiques décrites, par la suite isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Sur les figures un élément apparaissant sur plusieurs figures conserve la même référence.

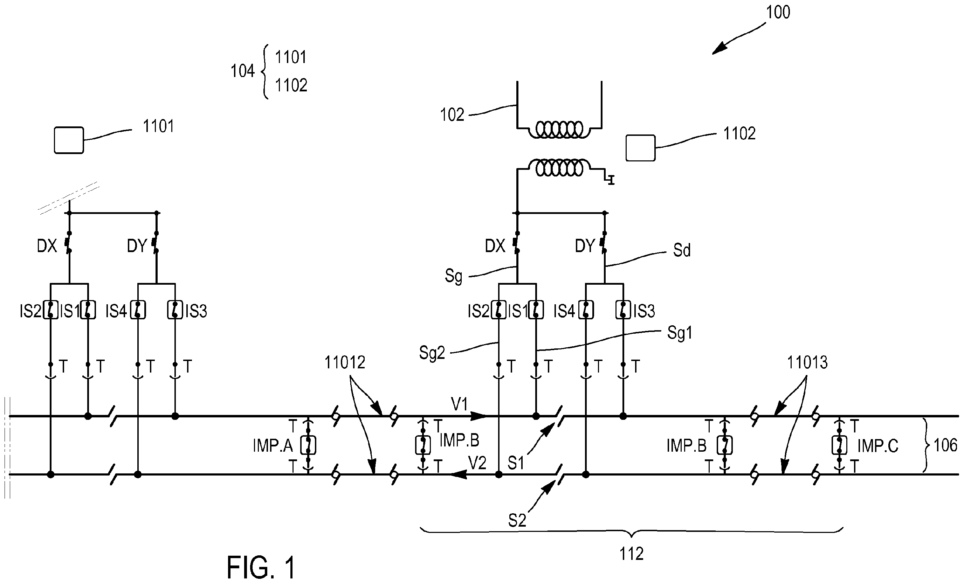

La figure 1 représente schématiquement une alimentation d'une caténaire d'une infrastructure ferroviaire. Un système 100 selon l'invention y est représenté.

Le système 100 comprend une alimentation 102 d'un secteur électrique 104 de caténaire 106 d'une infrastructure ferroviaire (non représentée) dans le cas d'une double voie V1, V2 et deux sous-stations 1101 et 1102.

La caténaire 106 est découpée en secteurs, eux-mêmes éventuellement découpés en sous-secteurs puis en sections élémentaires, par ordre décroissant de taille.

La sous-station 1102 alimente deux secteurs Sg, Sd. Les deux secteurs Sg et Sd sont divisés chacun en deux sous-secteurs. Les secteurs Sg et Sd sont situés de part et d'autre de la sous-station 1102 et sont respectivement alimentés par un disjoncteur Dx et un disjoncteur Dy. Les secteurs sont séparés par deux sectionnements S1 et S2 situés au niveau de la sous-station 1102. Les sectionnements S1 et S2 sont ouverts en temps normal et peuvent être fermés en cas de problème.

Le secteur Sg est lui-même divisé en deux sous-secteurs Sg2, Sg1, alimentés respectivement par un interrupteur IS2 pour le sous-secteur correspondant à la voie V2 et un interrupteur IS1 pour le sous-secteur de la voie V1. Les deux sous-secteurs Sg2 et Sg1 sont connectés par un interrupteur de mise en parallèle IMP.B.

La division du secteur Sd alimenté par Dy est similaire à celle du secteur alimenté par Dx. Plus précisément, le secteur Sd est lui-même divisé en deux sous-secteurs alimentés respectivement par un interrupteur IS4 pour le sous-secteur correspondant à la voie V2 et un interrupteur IS3 pour le sous-secteur de la voie V1. Les deux sous-secteurs du secteur Sd sont connectés par un deuxième interrupteur de mise en parallèle noté également IMP.B.

Dans le cas d'une alimentation électrifiée en 25 000 V alternatif à 50 Hz la zone d'alimentation de la sous-station 1102 est isolée électriquement de la zone d'alimentation de la sous-station adjacente 1101 par une section de séparation de phase 11012. Il est également représenté sur la figure 1 une section de séparation de phase 11013 entre la zone d'alimentation de la sous-station 1102 et celle d'une zone d'alimentation d'une sous station adjacente (non représentée).

Dans le cas d'une alimentation en 1 500V continus, les sous-stations 1101 et 1102 sont alimentées en parallèle. Il n'y a pas de section de séparation de phase. Il y a éventuellement des sectionnements.

Dans la suite de cette description et par souci de simplicité, le schéma de la figure 1 est conservé pour une alimentation électrifiée en 1 500 V continue tout en remplaçant les sections de séparation de phase 11012 et 11013 par un sectionnement identique à celui séparant les deux secteurs Sg et Sd de la sous-station 1102.

Le système 100 est configuré pour contrôler l'alimentation 102 du secteur électrique Sg de caténaire 106. Le contrôle est réalisé à partir de la sous-station 1102 alimentant un domaine d'alimentation 112.

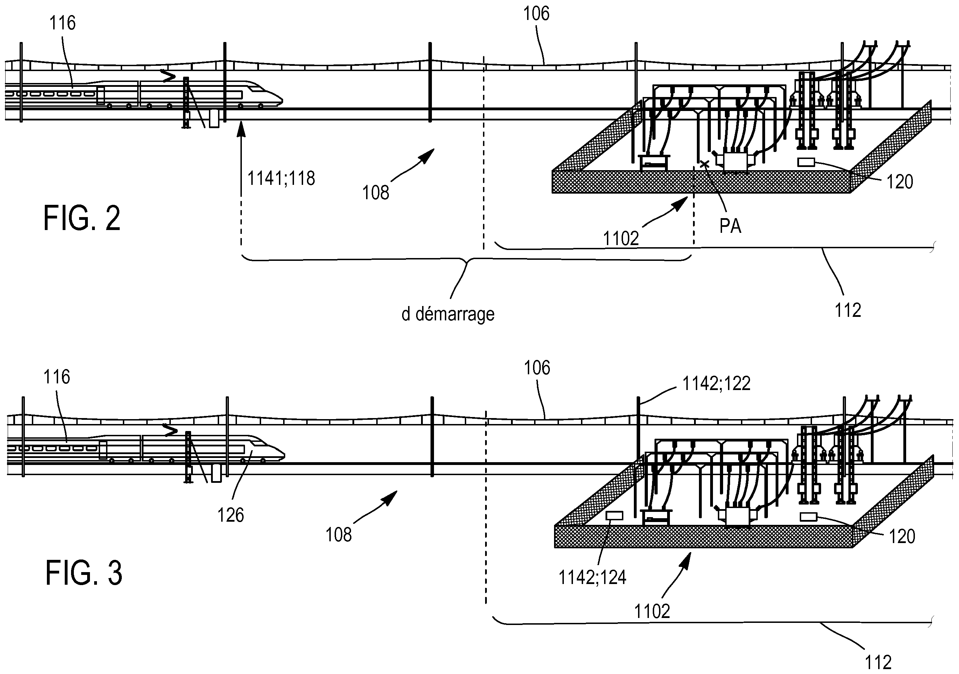

Comme cela sera expliqué plus en détail en référence aux figures 2 et 3, le système 100 comprend des moyens 1141, 1142 pour détecter une circulation d'un train 116 dans le domaine d'alimentation 112.

La figure 2 illustre un mode de réalisation d'un système qui ne fait pas partie de l'invention telle que revendiquée. Ce mode de réalisation est de préférence mis en oeuvre dans le cas d'une alimentation de caténaire 106 électrifiée en 25 000 V alternatif à 50 Hz telle qu'elle a été décrite ci-dessus.

Dans ce premier mode de réalisation non revendiqué, basé sur l'infrastructure, les moyens de détection de circulation 1141 dans le domaine d'alimentation 112 sont liés à l'infrastructure ferroviaire 108. Ces moyens de détection de circulation 1141 comprennent des moyens 118 pour détecter l'entrée et la sortie d'un train dans le domaine d'alimentation 112. Ces moyens 118 pour détecter l'entrée et la sortie sont situés en amont de l'entrée du domaine d'alimentation 112 et en aval de la sortie du domaine d'alimentation 112.

Les moyens 1141 pour détecter l'entrée et la sortie sont de préférence des composants de localisation des circulations utilisés par le système de signalisation tels que des relais de circuit de voie, des boîtiers de compteur d'essieux ou encore d'autres composants tels qu'une pédale de passages à niveau. Dans une variante de ce mode de réalisation, les moyens 118 pour détecter l'entrée et la sortie sont des composants spécifiquement mis en place, tels que des capteurs de présence.

Quels que soient les moyens 118 pour détecter l'entrée et la sortie de circulations utilisés, ces moyens doivent être positionnés suffisamment en amont de la zone d'alimentation 112 pour autoriser une mise sous tension de celle-ci avant que le train 106 n'entre dans celle-ci, quelle que soit la vitesse du train. En notant ddémarrage la distance entre le dispositif de détection et le point PA où l'alimentation doit être effective, il faut que l'équation ddémarrage > tdémarrage * vmax soit vérifiée. La durée tdémarrage est la durée nécessaire à la transmission de l'information, à son traitement et à la manoeuvre d'un appareillage de mise sous tension de la sous-section 1102 et vmax la vitesse maximale autorisée sur la section de ligne considérée. La durée tdémarrage peut par exemple être mesurée ou estimée.

Les informations de ces moyens 118 pour détecter l'entrée et la sortie sont transmises à un moyen de commande 120 de la sous-station 1102. Le moyen de commande 120 de la sous-station 1102 est réalisé sous forme d'un automate. L'automate est situé dans la sous-station 1102. Cet automate comprend une logique de type compteur de trains entrants et sortants de la zone.

L'automate commande l'alimentation électrique depuis la sous-station 1102 en actionnant l'ouverture ou la fermeture des disjoncteurs Dx ou Dy de la sous-station. En ce cas, la commande se fait au niveau des secteurs de la station. Cette variante semble plus aisée que la suivante qui nécessite plus d'installation et de maintenance de composants.

Dans une variante de ce mode de réalisation, l'automate commande l'alimentation électrique de la sous-station 1102 en actionnant l'ouverture ou la fermeture des interrupteurs IS1, IS2, IS3 et IS4 de cette sous-station. En ce cas, la commande se fait au niveau des sous-secteurs de la station, et nécessite donc plus d'actionneurs.

La communication entre les composants de détection et l'automate peut être réalisée en utilisant une radio, des câbles de signalisation, la norme GSM-R, ou encore des câbles dédiés tirés avec les câbles de signalisation.

La figure 3 illustre le mode de réalisation du système selon l'invention. Ce deuxième mode de réalisation est de préférence mis en oeuvre dans le cas d'une alimentation électrifiée en 1 500 V continue telle qu'elle a été décrite ci-dessus. En cas d'alimentation 1 500 V continue, il y a continuité électrique de la caténaire 106 en passant d'une sous-station à une autre, par exemple de la sous-station 1101 à la sous-station 1102.

Dans ce deuxième mode de réalisation selon l'invention, basé sur le train, les moyens de détection de circulations 1142 dans le domaine d'alimentation 112 comprennent :
- des moyens 122 pour recevoir des signaux émis par le train 116 et
- des moyens 124 pour traiter les signaux reçus de façon à détecter l'entrée et/ou la sortie du train 116 dans le domaine d'alimentation 112.

Les informations de ces moyens 124 sont ensuite transmises à un moyen de commande 120 de la sous-station 1102. Le moyen de commande 120 de la sous-station est réalisé sous forme d'un automate. L'automate est situé dans la sous-station.

Dans ce mode de réalisation, le train 116 utilise l'alimentation de caténaire 106 et est équipé d'un émetteur 126 pour émettre un signal de présence. L'émetteur 126 peut éventuellement être raccordé à l'informatique de bord du train pour transmettre des informations telles que la puissance effective du train ou encore sa vitesse, afin d'optimiser la mise sous tension d'une section selon ces paramètres.

Les moyens de réception 122 sont aptes à recevoir des signaux de type courant-porteur via la caténaire. Dans une variante, les moyens de réception sont aptes à recevoir des signaux de type radiofréquence.

Le signal est de fréquence porteuse constante sur le réseau. La fréquence porteuse est choisie pour ne pas perturber les différents circuits électriques et de télécommunication. Cette fréquence porteuse est utilisée pour moduler des informations telles que le numéro du train. La modulation est réalisée en amplitude ou en fréquence.

Les moyens de traitement 124 sont configurés pour déterminer la puissance du signal reçu par les moyens de réception 122 et commander l'alimentation électrique depuis la sous-station 1102 en actionnant l'ouverture ou la fermeture des disjoncteurs Dx ou Dy de la sous-station 1102 via l'automate lorsque la puissance du signal reçu est supérieure à une puissance prédéfinie. Cette puissance prédéfinie est un seuil de déclenchement.

Les moyens de traitement 124 sont en outre configurés pour commander d'autant plus rapidement l'alimentation électrique de la sous-station 1102 via l'automate que la puissance des signaux reçus est grande. La puissance du signal émise par le train peut être fonction de sa puissance effective et de sa vitesse instantanée.

Dans ce mode de réalisation, la puissance du signal émis augmente lorsque la puissance effective du train approchant ou sa vitesse augmente. Ainsi, une sous-station sera plus rapidement alimentée pour un train plus puissant. Ceci a pour effet de limiter les chutes de tension lors de l'arrivée en bordure de secteurs d'une alimentation à courant continu.

Les moyens 124 pour traiter les signaux reçus sont en outre configurés pour déterminer le numéro du train à partir des signaux reçus. L'automate est ainsi apte à compter les circulations à partir des numéros de train ainsi déterminés.

Lorsque les sous-stations sont alimentées en parallèle, ce qui est le cas dans une alimentation par électrifications en 1 500 V courant continu, le système comprend des moyens (non représentés) pour mesurer la tension effective dans la caténaire au niveau de la sous-station. Le système selon l'invention est configuré pour commander la non alimentation du domaine d'alimentation lorsque la tension effective est supérieure à un seuil prédéterminé. Plus précisément, lorsqu'au moins un signal de circulation est reçu par l'automate, et si la tension effective dans la caténaire au niveau de la station est au-dessus d'un seuil minimum, la caténaire n'est pas alimentée. Dans ce cas, les sous-stations encadrantes, c'est à dire les stations en amont et aval assurent l'alimentation électrique des circulations dans le secteur de la sous-station située entre ces deux sous-stations. Ainsi, si la circulation sur la ligne est très peu dense, il est par exemple possible de n'alimenter qu'une sous-station sur deux.

Un train utilisant une autre alimentation que celle provenant de la caténaire 106, par exemple un train mettant en oeuvre une source de puissance thermique, n'est pas équipé d'émetteur. Ainsi, la présence ou l'absence de ce train sera transparent pour le système selon l'invention.

Dans une variante de ce mode de réalisation, un tel train est équipé d'un émetteur pour transmettre une information spécifique, permettant d'avertir de la présence d'une circulation autonome. Cette variante est particulièrement adaptée aux trains bi-modes, c'est à dire aptes à circuler en mode électrique via la caténaire et en mode autonome avec des moteurs thermiques.

Dans les deux modes de réalisations, les postes de traction électrique - c'est à dire les interrupteurs de mise en parallèle et les postes de sectionnement - sont soit télécommandés depuis un centre de régulation de sous-stations ou depuis un poste d'aiguillage proche, soit manoeuvrables manuellement.

Dans le cas d'un poste de traction électrique comprenant un actionneur télécommandé, il est envisagé de raccorder l'actionneur du poste au système selon l'invention pour astreindre son changement d'état à la présence ou non de circulations dans la zone.

Dans les modes de réalisations, les moyens de détection de circulation 1141 et 1142 sont agencés pour différencier, dans le domaine d'alimentation, une circulation électrique d'une circulation autonome et les moyens de commande 120 de sous-station sont agencés pour alimenter électriquement le secteur de caténaire uniquement en cas de détection d'une circulation électrique.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

L'invention pourra par exemple être mise en oeuvre dans une infrastructure dans laquelle au moins un domaine d'alimentation attaché à une sous-station est découpé en une pluralité de sous-domaines d'alimentation. Dans cette infrastructure, les moyens de détection de circulation et les moyens de commande de la sous-station coopèrent pour commander une alimentation sélective respective de secteurs de caténaire correspondant respectivement aux sous-domaines d'alimentation.

De manière complémentaire ou alternative, le système selon l'invention peut être mis en oeuvre dans une alimentation de groupes disposés en parallèle, pour des sous-stations multi-groupes de traction, dans le but de moduler le nombre de groupes de traction en fonction du nombre de circulations dans le secteur et de leur puissance. Par exemple, si un seul train est dans le secteur (ou en approche), l'utilisation du système selon l'invention ne procèdera à l'alimentation électrique que d'un seul groupe de traction à puissance nominale au lieu de deux à demi-puissance.

L'invention est également transposable aux tramways. Il est ainsi possible de remplacer partout dans l'exposé, la description de mode de réalisations, ainsi que dans les revendications, le mot train par le mot tramway.

## Revendications

1. Système pour contrôler l'alimentation d'un secteur électrique (104) de caténaire (106) d'une infrastructure ferroviaire, à partir d'une sous-station (1101, 1102) desservant un domaine d'alimentation (112) pour ladite infrastructure, comprenant des moyens (118, 1141, 1142) pour détecter une circulation d'un train (116) dans ledit domaine d'alimentation (112), et des moyens pour commander (120) ladite sous-station (1101, 1102) de sorte que ledit secteur de caténaire (106) est alimenté électriquement par ladite sous-station (1101, 1102) tant qu'une circulation est détectée dans ledit domaine d'alimentation (112) **caractérisé en ce que** ledit secteur de caténaire (106) est alimenté électriquement par la sous-station (1101) alimentant le domaine d'alimentation (112) situé en amont dudit domaine d'alimentation (112) et/ou par la sous-station (1102) alimentant le domaine d'alimentation (112) situé en aval dudit domaine d'alimentation (112) quand aucune circulation n'est détectée dans ledit domaine d'alimentation (112).

2. Système selon la revendication 1, **caractérisé en ce que** les moyens de détection de circulation dans un domaine d'alimentation (112) comprennent des moyens (1141), liés à l'infrastructure ferroviaire, pour détecter l'entrée et/ou la sortie d'un train (116) dans ledit domaine d'alimentation (112).

3. Système selon la revendication 2, **caractérisé en ce que** les moyens (1141, 1142) pour détecter l'entrée et/ou la sortie dans ledit domaine sont respectivement situés en amont de ladite entrée dudit domaine d'alimentation (112) et/ou en aval de ladite sortie dudit domaine d'alimentation (112).

4. Système selon la revendication 1, **caractérisé en ce que** les moyens de détection de circulation (1142) dans un domaine d'alimentation (112) comprennent des moyens (122) pour recevoir des signaux émis par un train et des moyens (124) pour traiter lesdits signaux reçus de façon à détecter l'entrée et/ou la sortie dudit train (116) dans le domaine d'alimentation (112).

5. Système selon la revendication 4, **caractérisé en ce que** les moyens de réception (122) sont aptes à recevoir des signaux de type courant-porteur via la caténaire (106) ou des signaux de type radiofréquence.

6. Système selon la revendication 4 ou 5, **caractérisé en ce que** les moyens pour traiter (124) les signaux reçus sont en outre configurés pour interagir avec les moyens de commande (120) en fonction de la puissance desdits signaux reçus.

7. Système selon la revendication 4 à 6, **caractérisé en ce que** les moyens pour traiter (124) les signaux reçus sont en outre configurés pour déterminer le numéro du train à partir desdits signaux reçus.

8. Système selon l'une quelconque des revendications précédentes, **caractérisé en ce qu'**il comprend des moyens pour mesurer la tension effective dans la caténaire (106) au niveau de la sous-station (1101, 1102), le système (100) étant configuré pour commander la non alimentation du domaine d'alimentation (112) lorsque ladite tension effective est supérieure à un seuil prédéterminé.

9. Système selon l'une quelconque des revendications précédentes, **caractérisé en ce que** les moyens de détection de circulation (118, 1141, 1142) sont agencés pour différencier, dans le domaine d'alimentation (112), une circulation électrique d'une circulation autonome, les moyens de commande (120) de sous-station (1101, 1102) étant agencés pour alimenter électriquement le secteur de caténaire (106) uniquement en cas de détection d'une circulation électrique.

10. Système selon l'une quelconque des revendications précédentes, mis en oeuvre pour une infrastructure (108) dans laquelle au moins un domaine d'alimentation (112) attaché à une sous-station (1101, 1102) est découpé en une pluralité de sous-domaines d'alimentation, **caractérisé en ce que** les moyens de détection de circulation (118, 1141, 1142) et les moyens de commande (120) de ladite sous-station (1101, 1102) coopèrent pour commander une alimentation (102) sélective respective de secteurs de caténaire (106) correspondant respectivement auxdits sous-domaines d'alimentation.

## Patentansprüche

1. System zum Steuern der Stromversorgung eines Stromnetzes (104) einer Oberleitung (106) einer Eisenbahninfrastruktur von einem Unterwerk (1101, 1102) aus, das einen Stromversorgungsbereich (112) für die Infrastruktur bedient, umfassend Mittel (118, 1141, 1142) zur Erfassung eines Zugverkehrs (116) im Stromversorgungsbereich (112), und Mittel zum Steuern (120) des Unterwerks (1101, 1102), so dass der Oberleitungssektor (106) durch das Unterwerk (1101, 1102) mit Strom versorgt wird, solange ein Verkehr im Stromversorgungsbereich (112) erfasst wird, **dadurch gekennzeichnet, dass** der Oberleitungssektor (106) durch das Unterwerk (1101) mit Strom versorgt wird, das den Stromversorgungsbereich (112) versorgt, der dem Stromversorgungsbereich (112) vorgelagert ist und/oder von dem Unterwerk (1102), das den Stromversorgungsbereich (112) versorgt, der dem Stromversorgungsbereich (112) nachgelagert ist, wenn kein Verkehr im Stromversorgungsbereich (112) erfasst wird.

2. System nach Anspruch 1, **dadurch gekennzeichnet, dass** die Mittel zur Erfassung des Verkehrs in einem Stromversorgungsbereich (112) Mittel (1141) umfassen, die mit der Eisenbahninfrastruktur verbunden sind, um die Einfahrt und/oder Ausfahrt eines Zuges (116) in den Stromversorgungsbereich (112) zu erfassen.

3. System nach Anspruch 2, **dadurch gekennzeichnet, dass** die Mittel (1141, 1142) zur Erfassung der Einfahrt und/oder Ausfahrt in den Bereich jeweils vorgelagert zur Einfahrt in den Stromversorgungsbereich (112) und/oder nachgelagert zur Ausfahrt aus dem Stromversorgungsbereich (112) angeordnet sind.

4. System nach Anspruch 1, **dadurch gekennzeichnet, dass** die Mittel zur Erfassung des Verkehrs (1142) in einem Stromversorgungsbereich (112) Mittel zum Empfangen von Signalen umfassen, die von einem Zug emittiert werden, und Mittel zum Verarbeiten (124) der empfangenen Signale, um die Einfahrt und/oder Ausfahrt des Zuges (116) in den Stromversorgungsbereich (112) zu erfassen.

5. System nach Anspruch 4, **dadurch gekennzeichnet, dass** die Mittel zum Empfang (122) in der Lage sind, Stromträgersignale über die Oberleitung (106) oder Hochfrequenzsignale zu empfangen.

6. System nach Anspruch 4 oder 5, **dadurch gekennzeichnet, dass** die Mittel zum Verarbeiten (124) der empfangenen Signale ferner konfiguriert sind, um mit den Steuermitteln (120) in Abhängigkeit der Leistung der empfangenen Signale zu interagieren.

7. System gemäß Anspruch 4 bis 6, **dadurch gekennzeichnet, dass** die Mittel zum Verarbeiten (124) der empfangenen Signale ferner konfiguriert sind, um die Zugnummer aus den empfangenen Signalen zu bestimmen.

8. System nach einem der vorhergehenden Ansprüche, **dadurch gekennzeichnet, dass** es Mittel zum Messen der Effektivspannung in der Oberleitung (106) am Unterwerk (1101, 1102) umfasst, wobei das System (100) konfiguriert ist, um die Nichtversorgung des Stromversorgungsbereichs (112) zu steuern, wenn die Effektivspannung über einem vorbestimmten Schwellenwert liegt.

9. System nach einem der vorhergehenden Ansprüche, **dadurch gekennzeichnet, dass** die Mittel zur Erfassung des Verkehrs (118, 1141, 1142) angeordnet sind, um im Stromversorgungsbereich (112) einen elektrischen Verkehr von einem autonomen Verkehr zu unterscheiden, wobei die Mittel zum Steuern (120) des Unterwerks (1101, 1102) angeordnet sind, um den Oberleitungssektor (106) ausschließlich im Falle der Erfassung eines elektrischen Verkehrs mit Strom zu versorgen.

10. System nach einem der vorhergehenden Ansprüche, das für eine Infrastruktur (108) umgesetzt ist, in der mindestens ein Stromversorgungsbereich (112), der an einem Unterwerk (1101, 1102) angebracht ist, in eine Vielzahl von Unterversorgungsbereichen eingeteilt ist, **dadurch gekennzeichnet, dass** die Mittel zur Erfassung des Verkehrs (118, 1141, 1142) und die Mittel zum Steuern (120) des Unterwerks (1101, 1102) zusammenwirken, um eine selektive Stromversorgung (102) von Oberleitungssektoren (106) entsprechend den Unterversorgungsbereichen zu steuern.

## Claims

1. System for controlling the power supply of a catenary (106) electric power line (104) of a railway infrastructure from a substation (1101, 1102) serving a power supply domain (112) for said infrastructure, comprising means (118, 1141, 1142) for detecting a movement of a train (116) in said power supply domain (112), and means (120) for controlling said substation (1101, 1102) such that said catenary power line (106) is powered electrically by said substation (1101, 1102) while a movement is detected in said power supply domain (112), **characterized in that** said catenary power line (106) is powered electrically by the substation (1101) powering the power supply domain (112) located upstream of said power supply domain (112) and/or by the substation (1102) powering the power supply domain (112) located downstream of said power supply domain (112) when no movement is detected in said power supply domain (112).

2. System according to claim 1, **characterized in that** the means for detecting movement in a power supply domain (112) comprise means (1141), connected to the railway infrastructure, for detecting the entrance and/or the exit of a train (116) into or from said power supply domain (112).

3. System according to claim 2, **characterized in that** the means (1141, 1142) for detecting the entrance into and/or the exit from said domain are located upstream of said entrance into said power supply domain (112) and/or downstream of said exit from said power supply domain (112), respectively.

4. System according to claim 1, **characterized in that** the means (1142) for detecting movement in a power supply domain (112) comprise means (122) for receiving signals transmitted by a train and means (124) for processing said received signals so as to detect the entrance and/or the exit of the train (116) into or from the power supply domain (112).

5. System according to claim 4, **characterized in that** the receiving means (122) are capable of receiving carrier-current-type signals via the catenary (106) or radiofrequency-type signals.

6. System according to either claim 4 or 5, **characterized in that** the means (124) for processing the received signals are further configured to interact with the control means (120) based on the strength of said received signals.

7. System according to any of claims 4 to 6, **characterized in that** the means (124) for processing the received signals are further configured to determine the number of the train from said received signals.

8. System according to any of the preceding claims, **characterized in that** it comprises means for measuring the effective voltage in the catenary (106) in the region of the substation (1101, 1102), the system (100) being configured to control the removal of power from the power supply domain (112) when said effective voltage is greater than a predetermined threshold.

9. System according to any of the preceding claims, **characterised in that** the means (118, 1141, 1142) for detecting movement are arranged so as to differentiate, in the power supply domain (112), an electric movement from an autonomous movement, the control means (120) of the substation (1101, 1102) being arranged so as to electrically power the catenary power line (106) solely when an electric movement is detected.

10. System according to any of the preceding claims, implemented by an infrastructure (108) in which at least one power supply domain (112) connected to a substation (1101, 1102) is divided into a plurality of power supply subdomains, **characterized in that** the means (118, 1141, 1142) for detecting movement and the means (120) for controlling said substation (1101, 1102) cooperate in order to control a particular selective power supply (102) of catenary power lines (106) corresponding respectively to said power supply subdomains.
